# EUROPÄISCHE PATENTSCHRIFT

(11) **EP 2 025 960 B1**
(45) Veröffentlichungstag und Bekanntmachung des Hinweises auf die Patenterteilung: **15.12.2010**
(21) Anmeldenummer: 07015993.4
(22) Anmeldetag: 14.08.2007
(51) Int. Cl.: F16D 13/74

(54) **Lamellenkupplung**
Multi-plate clutch
Embrayage à disques multiples

(43) Veröffentlichungstag der Anmeldung: 18.02.2009
(73) Patentinhaber: Hoerbiger Antriebstechnik GmbH, 86956 Schongau (DE)
(72) Erfinder: Winkler, Bettina, D-86971 Peiting (DE); Nickel, Falk, D-86925 Fuchstal (DE); Ruprecht, Georg, D-87640 Biessenhofen (DE)
(74) Vertreter: Kitzhofer, Thomas

(56) Entgegenhaltungen:
- EP-A- 1 079 130
- WO-A-2007/102411
- US-A- 4 129 204
- US-A- 5 911 292

## Beschreibung

Die Erfindung betrifft eine Lamellenkupplung gemäß dem Oberbegriff des Anspruches 1.

Eine derartige Lamellenkupplung ist aus der DE 199 37 440 C1 bekannt.

Bei dieser bekannten Lamellenkupplung ist zur Ölversorgung der Lamellen ein Ölstausteg vorgesehen, der an einer Innenseite eines Mantelteils befestigt ist und der von einem Ring gebildet wird, der lösbar in einer Nut eingesetzt ist.

Die US-A-4 129 204 offenbart eine gattungsgemäße Lamallenkupplung gemäß dem Oberbegiff des Anspruchs 1.

Die Entwicklung des Antriebsstranges von Fahrzeugen wird heute stark von der Frage nach höchster Effizienz bestimmt.

Bei der gattungsgemäßen ölgekühlten Lamellenkupplung besteht das Problem von Leckagen, was die Effizienz der Kupplung mindert. Ferner entstehen hohe Kosten bei Fertigung und Montage. Zudem wird die Bauteilstruktur durch das Einbringen einer umlaufenden Kerbe in Form der Nut geschwächt, wodurch die Festigkeit abnimmt.

Es ist daher Aufgabe der vorliegenden Erfindung, eine Lamellenkupplung der im Oberbegriff des Anspruches 1 angegebenen Art zu schaffen, die eine Effizienzsteigerung durch Vermeidung von Leckagen bei der Ölzufuhr zum Lamellenpaket möglich macht sowie die weiteren systembedingten Nachteile zu vermeiden.

Die Lösung dieser Aufgabe erfolgt durch die Merkmale des Anspruchs 1.

Im Einzelnen wird bei der erfindungsgemäßen Lamellenkupplung eine Vorrichtung zur Abdichtung des Ölstauraumes vor dem Eintritt des Öls in das Lamellenpaket geschaffen.

Der Dichtring, der vorzugsweise als Elastomerring ausgeführt ist, ist hierbei zwischen einem radial außenliegenden Abstützring, dem Innenlamellenträger und einer Tellerfeder der Kupplung angeordnet. Durch diese Anordnung des Dichtringes wird die entsprechende Seite der Lamellenkupplung völlig abgedichtet.

Der Vorteil dieser Anordnung ist zunächst darin zu sehen, dass es nicht nötig ist, eine besondere Aufnahmenut für den Elastomerring vorzusehen und dass überdies ein derartiger Dichtring billiger ist als andere Ausführungen, beispielsweise Stahldrahtringe.

Ferner ergibt sich eine Gewichtseinsparung und eine einfachere Montage sowie eine absolute Dichtigkeit des erfindungsgemäß eingesetzten Dichtungsringes, was die Effizienz der Kupplung gemäß der Erfindung erhöht.

Die Unteransprüche haben vorteilhafte Weiterbildungen der Erfindung zum Inhalt.

Bei einer möglichen Ausführungsform der erfindungsgemäßen Lamellenkupplung als Motorradkupplung kann das Kühlöl von innen durch die Getriebewelle zum Lamellenpaket zugeführt werden. Dabei tropft das Öl von der Getriebewelle ab und wird von Fliehkraft oder Schwerkraft nach außen zum Innenlamellenträger befördert. Der Innenlamellenträger der erfindungsgemäßen Kupplung ist mit Ölkanälen und diese wiederum sind mit Ölbohrungen versehen, die das Öl zum Lamellenpaket fördern.

Um das Kühlöl von der Getriebeeingangswelle vollständig zu den Ölkanälen des Innenlamellenträgers zu führen, ist erfindungsgemäß die seitliche Abdichtung mittels des Dichtrings der erfindungsgemäßen Kupplung vorgesehen.

In Anspruch 7 ist eine Ölabdichtvorrichtung als selbstständig handelbares Objekt separat definiert.

Weitere Einzelheiten, Vorteile und Merkmale der vorliegenden Erfindung ergeben sich aus nachfolgender Beschreibung eines Ausführungsbeispiels anhand der beigefügten Zeichnung. Es zeigt:
- Fig. 1: eine Draufsicht auf einen Innenlamellenträger der erfindungsgemäßen Lamellenkupplung in vormontiertem Zustand,
- Fig. 2: einen Querschnitt durch den Innenlamellenträger sowie durch eine Tellerfeder, durch einen Tellerfederhalter sowie durch eine Fixierungsschraube,
- Fig. 3: einen Querschnitt durch eine zweite Ausführungsform einer Lamellenkupplung,
- Fig. 4: eine der Fig. 3 entsprechende Querschnittsdarstellung einer dritten Ausführungsform einer Lamellenkupplung, und
- Fig. 5: eine der Fig. 3 entsprechende Querschnittsdarstellung einer vierten Ausführungsform einer Lamellenkupplung.

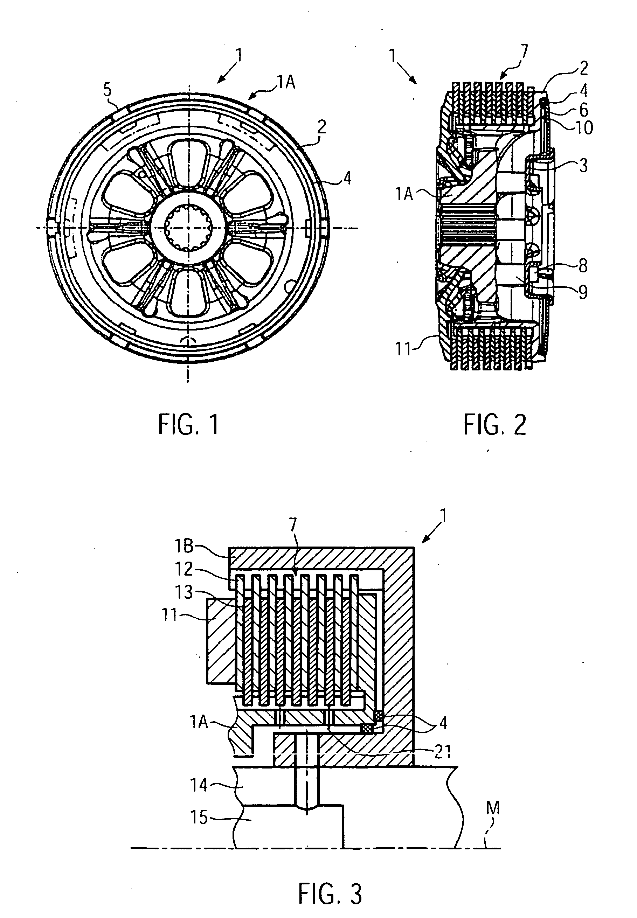

In Fig. 1 ist ein Innenlamellenträger 1A einer in ihrer Gesamtheit in den Figuren nicht im Einzelnen dargestellten Lamellenkupplung 1 gemäß der Erfindung dargestellt, da für die Erläuterungen der Prinzipien dieser Ausführungsform vorliegender Erfindung nur die Darstellung des Innenlamellenträgers 1A erforderlich ist. Natürlich weist die erfindungsgemäße Lamellenkupplung auch alle sonstigen Bauteile derartiger Kupplungen auf, wie sie beispielsweise in der eingangs erläuterten DE 199 37 440 C1 gezeigt und beschrieben sind.

Der Innenlamellenträger 1A weist einen äußeren Abstützring 2 auf. Wie die Fig. 1 und 2 verdeutlichen, ist zwischen einer Stirnfläche 10 des Innenlamellenträgers 1A, radial innerhalb des Abstützrings 2, und einer Tellerfeder 6 ein Dichtring 4, insbesondere ein als Elastomerring ausgebildeter O-Ring, angeordnet. Durch diese Anordnung erfolgt eine seitliche Abdichtung des Innenlamellenträgers 1A in der eingangs erläuterten Art und Weise.

Wie Fig. 1 ferner verdeutlicht, sind am Umfang des Abstützrings 2 eine Mehrzahl von optionalen Nuten vorgesehen, von denen eine mit der Bezugsziffer 5 gekennzeichnet ist.

Fig. 2 zeigt den Innenlamellenträger 1A mit einem Lamellenpaket 7 und mit der am Innenlamellenträger 1A montierten Tellerfeder 6, die über einen Tellerfederhalter 3 an einem Kolben 11 fixiert wird. Hierzu ist beispielhaft die Fixierung mit einer oder mehrerer Schrauben 8 vorgesehen, die in eine entsprechende Anzahl von Innengewindestücken eingeschraubt werden, von denen in Fig. 2 eines mit der Bezugsziffer 9 gekennzeichnet ist.

In Fig. 3 ist eine zweite Ausführungsform einer Lamellenkupplung 1 dargestellt, bei der sämtliche Teile, die der Ausführungsform gemäß den Fig. 1 und 2 entsprechen, mit den gleichen Bezugsziffern versehen sind.

Die Darstellung der Fig. 3 verdeutlicht neben dem Innenlamellenträger 1A mit seinen Innenlamellen 13 ferner den Außenlamellenträger 1B des Lamellenträgers der erfindungsgemäßen Lamellenkupplung 1, der Außenlamellen 12 lagert.

Ferner ist in dieser Darstellung, die nur den oberen Teil der Lamellenkupplung 1 oberhalb deren Mittellinie M zeigt, die Welle 14 der Lamellenkupplung 1 dargestellt, die mit einer Kühlölzufuhreinrichtung 15 versehen ist, die Kühlöl in einen Raum 21 zwischen dem Innenlamellenträger 1A und dem Außenlamellenträger 1B einführt. Wie Fig. 3 verdeutlicht, ist bei dieser Ausführungsform der Dichtring 4 zwischen dem Innenlamellenträger 1A und dem Außenlamellenträger 1B angeordnet, wobei die Fig. 3 zwei alternative Anordnungsmöglichkeiten umfangs- und stirnseitig verdeutlicht, die im Bedarfsfalle auch beide vorgesehen sein können. Mit anderen Worten ist es möglich, nur einen Dichtring 4 umfangsseitig oder stirnseitig, wie aus Fig. 3 im Einzelnen entnehmbar, zwischen dem Innenlamellenträger 1A und dem Außenlamellenträger 1B vorzusehen, oder eben zwei derartige Dichtringe 4, wie sich dies aus Fig. 3 ergibt. Fig. 3 zeigt hierbei dementsprechend eine Abdichteinrichtung zwischen dem Innenlamellenträger 1A und dem Außenlamellenträger 1B, bei der eine Aktuatorik in Form des Kolben 11 vorgesehen ist, der mit dem Innenlamellenträger 1A rotiert.

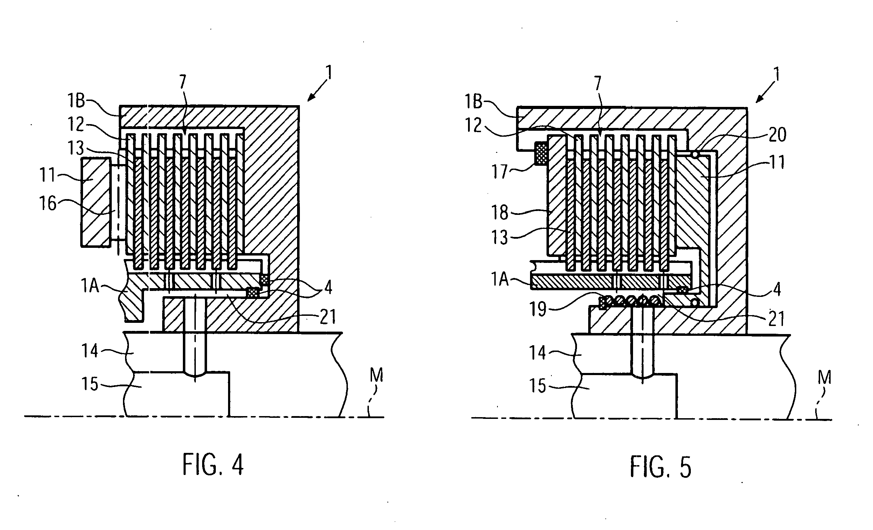

In Fig. 4 ist eine dritte Ausführungsform einer Lamellenkupplung 1 dargestellt, bei der alle die Teile, die derjenigen der Fig. 3 entsprechen, mit den gleichen Bezugsziffern versehen sind.

Bei dieser Ausführungsform ergibt sich eine Besonderheit, da die Abdichtungseinrichtung in Form des Dichtringes 4 zwischen dem Innenlamellenträger 1A und dem Außenlamellenträger 1B bei einem Aktuator bzw. Kolben 11 vorgesehen ist, der nicht rotierend ausgebildet ist, wozu bei dieser Ausführungsform ein Axiallager 16 vorgesehen ist. Ansonsten entspricht diese Ausführungsform derjenigen der Fig. 3, so dass es hier wiederum möglich ist, dass entweder ein Dichtring 4 an der Stelle, die der Fig. 4 entnommen werden kann, zwischen dem Innenlamellenträger 1A und dem Außenlamellenträger 1B vorgesehen ist, oder zwei derartige Dichtringe 4.

In Fig. 5 ist eine vierte Ausführungsform einer Lamellenkupplung 1 dargestellt, bei der wiederum alle Teile, die derjenigen der Fig. 3 und 4 entsprechen, mit den gleichen Bezugsziffern versehen sind.

Die Lamellenkupplung 1 gemäß der Ausführungsform der Fig. 5 zeichnet sich durch die Besonderheit aus, dass der Aktuator bzw. Kolben 11 mit dem Außenlamellenträger 1B rotiert und die Abdichteinrichtung bzw. der Dichtring 4 zwischen dem Innenlamellenträger 1A und dem Kolben 11 angeordnet ist.

Ferner zeigt die Ausführungsform gemäß Fig. 5 einen Sicherungsring 17, der eine Endlamelle 18 des Lamellenpaketes 7 sichert. Ferner ist ein Sicherungsring 19 vorgesehen, der den Kolben 11 gegenüber dem Außenlamellenträger 1B sichert, wie sich dies im Einzelnen aus der Darstellung der Fig. 5 ergibt.

Neben der voranstehenden schriftlichen Offenbarung der Erfindung wird hiermit explizit auf deren zeichnerische Darstellung in den Fig. 1 bis 5 Bezug genommen.

### Bezugszeichenliste

- 1: Lamellenkupplung
- 1A: Innenlamellenträger } Lamellenträger
- 1B: Außenlamellenträger
- 2: Abstützring
- 3: Tellerfederhalter
- 4: Dichtring/Elastomerring
- 5: Nuten
- 6: Tellerfeder
- 7: Lamellenpaket
- 8: Fixierungsschrauben
- 9: Innengewindestücke
- 10: Stirnfläche
- 11: Kolben
- 12: Außenlamellen
- 13: Innenlamellen
- 14: Welle
- 15: Kühlölzufuhreinrichtung
- 16: Axiallager
- 17: Sicherungsring
- 18: Endlamelle
- 19: Sicherungsring
- 20: Optionale Dichtungseinrichtung des Kolbens 11 im Falle einer hydraulischen Aktuierung
- 21: Raum

## Patentansprüche

1. Lamellenkupplung (1) mit einem Lamellenpaket (7), das an einem Lamellenträger (1A, 1B) angeordnet ist, der einen Innenlamellenträger (1A) und einen Dichtring (4) zum Sammeln von Kühlöl aufweist, **dadurch gekennzeichnet,**
- **dass** der Innenlamellenträger (1A) einen radial äußeren Abstützring (2) und eine radial innerhalb des Abstützrings (2) angeordnete Stirnfläche (10) aufweist, an der der Dichtring (4) über eine am Innenlamellenträger (1A) fixierbare Tellerfeder (6) angelegt ist.

2. Lamellenkupplung nach Anspruch 1, **dadurch gekennzeichnet, dass** der Dichtring (4) als O-Ring ausgebildet ist.

3. Lamellenkupplung nach Anspruch 1 oder 2, **dadurch gekennzeichnet, dass** der Dichtring als Elastomerring ausgebildet ist.

4. Lamellenkupplung nach Anspruch 1, **dadurch gekennzeichnet, dass** der Abstützring (2) mit dem Innenlamellenträger (1A) einteilig ausgeführt ist.

5. Lamellenkupplung nach Anspruch 1, **dadurch gekennzeichnet, dass** der Dichtring (4) mit dem Innenlamellenträger (1A) oder der Tellerfeder (6) einteilig ausgebildet ist.

6. Lamellenkupplung nach Anspruch 1, **dadurch gekennzeichnet, dass** der Abstützring (2) mit dem Dichtring (4) einteilig ausgebildet ist.

7. Ölabdichtvorrichtung für eine Lamellenkupplung (1), die ein Lamellenpaket (7) mit Innen- und Außenlamellen (13 bzw. 12) und einen Innenlamellenträger (1A) und einen Außenlamellenträger (1 B) aufweist, wobei der Lamellenträger (1A, 1 B) einen Dichtring (4) zum Sammeln von Kühlöl aufweist, **dadurch gekennzeichnet, dass** der Dichtring (4) zwischen einer Stirnfläche (10) des Innenlamellenträgers (1A) und einer am Innenlamellenträger (1A) fixierbaren Tellerfeder (6) angeordnet ist.

8. Ölabdichtvorrichtung nach Anspruch 7, **dadurch gekennzeichnet, dass** der Dichtring (4) als O-Ring ausgebildet ist.

9. Ölabdichtvorrichtung nach einem der Ansprüche 7 bis 8, **dadurch gekennzeichnet, dass** der Dichtring (4) als Elastomerring ausgebildet ist.

## Claims

1. A multi-disk clutch (1) with a disk packet (7) which is arranged on a disk carrier (1A, 1 B) which includes an inner disk carrier (1A) and a sealing ring (4) for collecting cooling oil, **characterized in**
- **that** the inner disk carrier (1A) includes a radially outer supporting ring (2) and an end face (10) arranged radially inside the supporting ring (2), against which the sealing ring (4) is placed via a disk spring (6) fixable at the inner disk carrier (1A).

2. The multi-disk clutch according to claim 1, **characterized in that** the sealing ring (4) constitutes an O-ring.

3. The multi-disk clutch according to claim 1 or 2, **characterized in that** the sealing ring constitutes an elastomer ring.

4. The multi-disk clutch according to claim 1, **characterized in that** the supporting ring (2) is formed integrally with the inner disk carrier (1A).

5. The multi-disk clutch according to claim 1, **characterized in that** the sealing ring (4) is formed integrally with the inner disk carrier (1A) or the disk spring (6).

6. The multi-disk clutch according to claim 1, **characterized in that** the supporting ring (2) is formed integrally with the sealing ring (4).

7. An oil sealing device for a multi-disk clutch (1) which includes a disk packet (7) with inner and outer disks (13, 12) and an inner disk carrier (1A) and an outer disk carrier (1 B), wherein the disk carrier (1A, 1 B) includes a sealing ring (4) for collecting cooling oil, **characterized in that** the sealing ring (4) is arranged between an end face (10) of the inner disk carrier (1A) and a disk spring (6) fixable at the inner disk carrier (1A).

8. The oil sealing device according to claim 7, **characterized in that** the sealing ring (4) constitutes an O-ring.

9. The oil sealing device according to any of claims 7 to 8, **characterized in that** the sealing ring (4) constitutes an elastomer ring.

## Revendications

1. Embrayage à disques (1), comportant un paquet de disques (7) agencé sur un support de disques (1A, 1 B) comprenant un support (1A) de disques intérieurs et une bague d'étanchéité (4) pour collecter de l'huile de refroidissement, **caractérisé en ce que**
- le support (1A) de disques intérieurs présente un anneau de support (2) radialement extérieur et une face frontale (10) qui est agencée radialement à l'intérieur de l'anneau de support (2) et contre laquelle la bague d'étanchéité (4) est en appui par l'intermédiaire d'un ressort à disques (6) apte à être fixé au support (1A) de disques intérieurs.

2. Embrayage à disques selon la revendication 1, **caractérisé en ce que** la bague d'étanchéité (4) est réalisée sous forme de joint torique.

3. Embrayage à disques selon la revendication 1 ou 2, **caractérisé en ce que** la bague d'étanchéité est réalisée sous forme de bague élastomère.

4. Embrayage à disques selon la revendication 1, **caractérisé en ce que** l'anneau de support (2) est réalisé d'un seul tenant avec le support (1A) de disques intérieurs.

5. Embrayage à disques selon la revendication 1, **caractérisé en ce que** la bague d'étanchéité (4) est réalisée d'un seul tenant avec le support (1A) de disques intérieurs ou avec le ressort à disques (6).

6. Embrayage à disques selon la revendication 1, **caractérisé en ce que** l'anneau de support (2) est réalisé d'un seul tenant avec la bague d'étanchéité (4).

7. Dispositif d'étanchéité à l'huile pour un embrayage à disques (1) qui comporte un paquet de disques (7) présentant des disques intérieurs et extérieurs (13 et 12) ainsi qu'un support (1A) de disques intérieurs et un support (1 B) de disques extérieurs, le support de disques (1A, 1 B) présentant une bague d'étanchéité (4) pour collecter de l'huile de refroidissement, **caractérisé en ce que** la bague d'étanchéité (4) est agencée entre une face frontale (10) du support (1A) de disques intérieurs et un ressort à disques (6) apte à être fixé au support (1A) de disques intérieurs.

8. Dispositif d'étanchéité à l'huile selon la revendication 7, **caractérisé en ce que** la bague d'étanchéité (4) est réalisée sous forme de joint torique.

9. Dispositif d'étanchéité à l'huile selon l'une des revendications 7 à 8, **caractérisé en ce que** la bague d'étanchéité (4) est réalisée sous forme de bague élastomère.
